# EUROPEAN PATENT APPLICATION

(11) **EP 3 819 535 A1**
(43) Date of publication of application: **12.05.2021**
(21) Application number: 20205788.1
(22) Date of filing: 04.11.2020
(51) Int. Cl.: F21S 43/14, F21S 43/145, F21S 43/237, F21S 43/239, F21S 43/241, F21S 43/245, F21S 43/249, F21S 43/247, B60Q 3/62, B60Q 3/64, B60Q 3/66, B60Q 3/20, B60Q 3/217, B60Q 3/225, B60Q 3/233, B60Q 3/267, B60Q 3/292, B60Q 3/74

(54) **ILLUMINATION DEVICE FOR A VEHICLE INTERIORS**

(30) Priority: 07.11.2019 ES 201930981
(71) Applicant: Seat, S.A., 08760 Martorell (ES)
(72) Inventor: DE MENDONÇA MAIA, André, 08760 MARTORELL (ES); BENDAÑA SUEIRO, Xesús Manoel, 08760 MARTORELL (ES)
(74) Representative: Ponti & Partners, S.L.P

(57) **Abstract**

The present invention relates to a device for homogeneously illuminating a certain area of a vehicle interior, preferably a three-dimensional surface of the interior door panel or of the dashboard of a vehicle, with a light that degrades along one or more directions on the surface to be illuminated. The invention is capable of illuminating complex three-dimensional surfaces that have one or more negative portions (i.e., one or more surfaces with at least one change in curvature, from a concave to a convex surface), such that with the device of the invention, both portions (concave and convex) are illuminated by a light emitter arranged at the beginning of the first concave surface.

It also relates to a portion of interior trim for a vehicle with integrated illumination for illuminating a decorative element.

## Description

The present invention relates to a device for homogeneously illuminating an interior area of a vehicle, wherein the interior area is preferably a three-dimensional surface of the interior door panel or of the dashboard of a vehicle, with a light that degrades along one or more directions on the three-dimensional surface to be illuminated, and which is capable of illuminating complex three-dimensional surfaces that have one or more negative portions (i.e., three-dimensional surfaces with one or more portions that have at least one inflection line, i.e., a change in curvature, for example from a first concave surface to a convex surface, such that a portion of the convex surface is hidden without the option of being illuminated by a light emitter arranged at the beginning of the first concave surface).

### Background of the invention

Illumination systems for vehicle interiors comprising the elements described in the preamble of claim 1 of the present invention are known.

Specifically, illuminating the interior of the vehicles with "ambient light" with the aim of generating specific effects is known. The terms "ambient light" or "mood lighting" are interchangeably used in the industry to describe a low level of light that helps to perceive the space around a user, for example, inside the passenger compartment of a vehicle. It also has a decorative function. Suitable ambient light can emphasize interior design features or achieve surprising effects when these lights are unexpectedly used behind a translucent or opaque material.

In general, these known illumination systems for vehicle interiors with ambient light or mood lighting are based on the provision of an elongated light guide that runs along a longitudinal direction of an interior area of a vehicle to be illuminated, such as the door panel or the dashboard. The light guide has the function of transmitting the light beams generated by one or more light emitters or light sources along this longitudinal direction and emitting them in a transverse direction to the outside of the light guide. The light beams escape from the light guide through the provision of a plurality of optical structures arranged on different points of the light guide and they are directed in said transverse direction towards the interior area to be illuminated, thereby generating the desired illumination which presents a progressive gradient (such that a greater light intensity will be perceived near the light guide and a lower light intensity will be perceived as we move away from it).

However, these known systems only enable three-dimensional surfaces that have positive elements to be illuminated, so that the use thereof conditions and limits the design of the door panel, in the area to be illuminated. In other words, if the door panel has, for example, a complex geometry with one or more "negative portions", the negative portions will not be able to be illuminated by means of a conventional light guide since they remain hidden without the possibility of rectilinear light beams reaching them. Therefore, incorporating said types of conventional illumination systems conditions the design of the door panel geometry and forces them not to have "negative portions" to be illuminated.

With regards to the term "negative portion" of a door panel we refer to the following: when taking the light guide or one or more single point light emitters as a reference, the outgoing light beams are directed towards the door panel. All portions of the door panel that have a convex geometry with respect to the light emitter can be illuminated. Thus, the light beams will directly strike the door panel with a convex area (or positive surface). However, when there is an inflection point or line with respect to said convex surface, the emitted light beams can no longer strike directly and it is necessary to illuminate them with a second point of light.

Furthermore, the indirect illumination of one or more foils (which can also be decorated) is also known in the State of the Art. It is based on emitting light towards the interior of the passenger compartment of the vehicle and inserting a foil or decorative element between said light emitter and the passenger compartment, i.e., above the illuminated surface through which the light beams are extracted. This foil must be microperforated in order to enable light beams to pass through said holes. The effect that is created is backlighting and not direct illumination, as sought in this invention.

It therefore appears necessary to offer an alternative to the State of the Art that covers the gaps found therein, providing an illumination system for vehicle interiors, in particular for homogeneously illuminating a three-dimensional surface (for example, a door panel) with a light gradient (greater intensity near the light emitter and lower intensity away from the light emitter) and which is also capable of illuminating complex three-dimensional surfaces that have negative portions (i.e., that have one or more surfaces that have at least one inflection point or line incapable of being directly illuminated by a single light-emitting element).

### Description of the invention

The object of the present invention is to provide an illumination system, suitable to be installed inside the interior of a motor vehicle, for example integrated in the door panel or in the dashboard, and which solves the aforementioned drawbacks and has the advantages described below.

According to a first aspect, the present invention provides an illumination system for vehicle interiors, which comprises as is known:
- at least one light-emitting module, and
- a decorative element to be illuminated, wherein the decorative element extends along a longitudinal direction "X" (for example a substantially horizontal direction) and across the width in a transverse direction "Z" (for example a substantially vertical direction).

Unlike the illumination systems for vehicle interiors known in the State of the Art, the one proposed by the present invention characteristically further comprises:
- a transparent moulding, which extends across the length and width of the decorative element, wherein the transparent moulding comprises an incoming light surface and a front outgoing light surface, and wherein the transparent moulding is configured for receiving the light beams generated by the at least one light-emitting module through said incoming light surface and transmitting them through the interior of the transparent moulding by effect of the internal reflection when bouncing off the walls thereof; and
- wherein the decorative element is substantially opaque and is joined to the face of the transparent moulding opposite the front outgoing light surface, and wherein the decorative element is configured for generating an internal reflection of the light beams transmitted inside the transparent moulding and which strike said decorative element, so that the light beams reflected by the decorative element in a direction substantially perpendicular to the front outgoing light surface of the transparent moulding are extracted from said transparent moulding in a direction substantially perpendicular to said outgoing light surface, resulting in an illumination of the decorative element.

The term "direction substantially perpendicular to the front outgoing light surface of the transparent moulding" refers to a direction that has an inclination angle comprised between -30° and 30° with respect to the entirely perpendicular direction that we will refer to by "V".

The surprising effect that takes place due to the fact that both materials (decorative element and transparent moulding) are close together (i.e., joined, having no air gap between them) is that the light beams which strike the decorative element are reflected both diffusely and specularly. In the case of not having the decorative element joined to a surface of the transparent moulding, the light beams that would strike the surfaces of the transparent moulding would only be transmitted by internal reflection along the same, without being extracted from said transparent moulding.

When the specular reflection of the light beams is generated, some of them come out through the front outgoing light surface, such that no optics, engravings or other means for extracting light are required in the moulding itself which enable them to be extracted from the moulding. In other words, the light beams reflected by the decorative element in "a direction substantially perpendicular to the front outgoing light surface of the transparent moulding" are extracted from said transparent moulding in a direction substantially perpendicular to said front outgoing light surface, resulting in an illumination of the decorative element. In contrast, the rest of the light beams reflected by the decorative element in a direction other than "a direction substantially perpendicular to the front outgoing light surface of the transparent moulding" do not escape the transparent moulding and are transmitted through the transparent moulding due to the effect of internal reflection on the inner walls of said transparent moulding.

In more detail, the decorative element generates both specular reflection and diffuse reflection. Mainly it will be the specularly reflected rays that will be substantially perpendicular to the front outgoing light surface, but there will also be diffuse-type rays that are in a direction "substantially perpendicular" to the front outgoing light surface and will also be extracted from the transparent moulding. It is precisely this combination of both types of reflections (specular reflection in combination with diffuse reflection) of the decorative element that advantageously causes a highly homogeneous illumination of the decorative foil, while the gradient of the light intensity is observed (so that as we move away from the light-emitting module in the transverse direction "Z", the illumination intensity decreases). One of the great advantages of this invention is that it illuminates the decorative element with great homogeneity, unlike other known systems that do not achieve this.

A further great advantage of the present invention with respect to conventional illumination systems for vehicle interiors is that this illumination system for vehicle interiors is capable of directly illuminating the decorative element, even when the area of the door panel to be illuminated has a three-dimensional shape with one or more negative portion(s) (or inflection points/lines).

Preferably, the surface to be illuminated by this illumination system is a three-dimensional surface of a portion or the entirety of the interior door panel or of the dashboard of a vehicle, although other interior portions of the vehicle can be perfectly illuminated by the system of the invention.

The term "three-dimensional surface" is understood to comprise either one or more edges arranged between surfaces intersecting each other, or one or more inflection points/lines arranged between continuous surfaces, i.e., arranged between a concave surface and a convex surface, or vice versa. It is required that the edge(s) or the inflection point(s)/line(s) be arranged on said surface to be illuminated.

With respect to the decorative element, it is made up of a non-microperforated body or surface of very little thickness (a few millimeters), i.e., a continuous surface devoid of perforations that enables the light to pass through said perforations.

Preferably, the geometry (which can be three-dimensional, i.e., not flat, with reliefs) of the internal face of the transparent moulding is a geometry substantially equal to that of the decorative element of the illumination system for vehicle interiors to be illuminated. As there is coincidence or quasi-coincidence between both geometries of the contact surfaces between the decorative element and the transparent moulding, full or nearly full contact between both of them is ensured. According to a preferred embodiment, the front outgoing light surface comprises a geometry substantially equal to the geometry of the anterior surface of the transparent moulding, the anterior surface being opposite the front outgoing light surface. Thus, the three-dimensional geometry of the decorative element is replicated in the transparent moulding, both on the anterior surface and on the front outgoing light surface thereof.

Also, preferably, the decorative element comprises a visible face (i.e., the face facing the interior of the vehicle) with a painted surface finish, for example with one or more colours. The effect achieved with this painted visible face is that the decorative element, by being painted with a surface finish, said surface finish favours the specular reflection of the light beams when they strike it (although there will also be some diffuse reflection, as will be explained below). The light beams that strike the decorative element and are reflected in a direction substantially perpendicular to the outgoing light surface of the transparent moulding will come out from said transparent moulding. However, on the contrary, the light beams that are reflected in a "substantially parallel" direction do not escape from the inner cavity of the moulding.

By way of example, the decorative element is a foil with a homogeneous colour or with a pattern or with a decorative drawing printed on at least one of the faces thereof (for example, a printed pattern that simulates wood, or simulates a metal finish, etc.), although other possible configurations are possible. By way of example, the decorative element can be made of printed film, leather film, artificial leather film, metal film, plastic film, wood film, or natural fibre film.

Preferably, the decorative element to be illuminated is joined through direct contact with the entire surface of the inner side of the transparent moulding. Therefore, there is no air gap between the transparent moulding and the decorative element, thereby causing the advantageous specular reflection when the light beams strike the decorative element. If an air gap existed, the light beams would only be transmitted by the light guide and the light beams would not escape from the light guide.

By way of example, the decorative element is joined to the internal face of the transparent moulding by means of one or more gluing points, although other conventional joining means can be alternatively used without altering the essence of the invention.

A possible manufacturing method of the decorative element-transparent moulding assembly is by means of a method for over injecting the transparent moulding onto the decorative element.

With respect to the transparent moulding, it has the function of transmitting the light throughout the inner cavity thereof by means of internal reflection on the transparent internal walls thereof and also allowing the light to come out through the front surface thereof towards the vehicle interior.

Furthermore, also preferably, the transparent moulding has a three-dimensional body with low thickness. When referring to thickness, we mean the thickness in the direction "Y". The thickness of the body of the transparent moulding is preferably comprised between 1 mm and 6 mm in order to be perfectly housed inside a portion of the door panel of a vehicle and at the same time be able to perform the function thereof. The transparent moulding can be any width and length that may be required, even several centimetres wide and several centimetres long.

The transparent moulding can have any three-dimensional shape, it can even have a three-dimensional geometry with one or more negative portions. The definition of the term "negative portion(s)" has been explained above. As indicated above, the front outgoing light surface of the transparent moulding comprises a geometry with "negative portion(s)", i.e., with one or more changes or inflection lines in the direction "Y".

Preferably, the illumination system for vehicle interiors comprises a single transparent moulding for each interior surface to be illuminated.

Also, preferably, the face facing the inside of the transparent moulding covers the entire decorative element to be illuminated.

The transparent moulding is made of plastic, preferably PMMA (polymethyl methacrylate), although it can also be made of PC (polycarbonate). Also preferably, the front outgoing light surface (i.e., the surface corresponding to the front side facing the passenger compartment) of the transparent moulding comprises a polished surface finish on the inner face of the front outgoing light surface, favouring specular reflection inside the transparent moulding. Moreover, the surface finish of the anterior surface, i.e., the surface opposite the inner face of the front outgoing light surface, which copies or imitates the surface finish of the decorative element, mainly favours diffuse reflection (i.e., that a portion of the rays striking said anterior surface of the transparent moulding are reflected in a substantially perpendicular direction, being extracted from the transparent moulding.

With respect to the at least one light-emitting module, according to a first embodiment, it comprises a plurality of light emitters arranged distributed in different specific positions along the longitudinal direction "X" configured for individually generating light beams in the transverse direction "Z" that are introduced into the transparent moulding, as at least one portion of the plurality of light emitters is directed towards the incoming light surface of the transparent moulding. The incoming light surface of the transparent moulding extends in the longitudinal direction "X" and is installed touching or very close to said plurality of light emitters, thus avoiding losses of light and improving the luminous efficiency of the illumination system.

This plurality of light emitters may be arranged on a printed circuit board (PCB) which is operationally coupled with a controller which has a control circuit that includes a light emitter drive circuit for simultaneously or sequentially controlling the activation and deactivation of the different light emitters. The PCB can be any type of circuit board, including but not limited to any flexible PCB and/or rigid PCB. The controller can be arranged inside or outside the illumination system.

Alternatively, according to a second embodiment, the at least one light-emitting module comprises at least one light emitter that emits light in the longitudinal direction "X" and at least one light guide arranged along the longitudinal direction "X" and configured for transmitting the light beams emitted by said light emitter that enter inside the light guide along the longitudinal direction "X" by internal reflection on the internal walls thereof and for extracting the light beams in the vertical direction "Z" and toward the incoming surface of the transparent moulding. The light guide has an elongated body which extends longitudinally in the longitudinal direction "X" and the light guide is arranged touching or very close to the incoming light surface of the transparent moulding. The light beams escape from inside the light guide through the provision of conventional escape elements or optical structures arranged along the longitudinal direction "X" of the light guide configured for directing the outgoing light beams in a substantially vertical direction "Z" and in the direction towards the incoming light surface of the transparent moulding.

The at least one light emitter or the plurality of light emitters can be controlled between a first "off" state and a second "on" state. The at least one light emitter can include any form of known light source or light emitter. Light-emitting diode (LED) is chosen as the preferred light emitter, although any other form of illumination configured for emitting light can be used, such as fluorescent illumination, organic LEDs (OLED), polymer LEDs (PLED), or solid-state lighting.

The light source(s) emit radiation visible to the human eye, each light source having a colour, which can be the same or different if there is more than one light emitter. The light emitter can have any colour.

The light guide has the necessary length according to the surface to be illuminated. In some embodiments, the light guide may incorporate optics in the lower portion thereof to further direct the light beams towards a desired location (which is the incoming light surface of the transparent moulding). A light guide can be joined to the incoming light surface of the transparent moulding or located at a very short distance. The light guide can be a substantially transparent or translucent guide suitable for transmitting light. The light guide can be formed from a rigid material that is made up of a curable substrate such as a polymerisable composite, a transparent material mould (MIC), or mixtures thereof. Acrylates are also commonly used to form rigid light tubes, as is polymethyl methacrylate (PMMA), which is a known substitute for glass. A polycarbonate material can also be used in an injection moulding process to form the rigid light guide.

Furthermore, the light guide may be a flexible light guide, wherein a flexible material suitable for creating the light guide is used. Such flexible materials include urethanes, silicone, thermoplastic polyurethane (TPU), or other similar flexible optical grade materials.

The light guide may also be referred to in the art as a light tube, light plate, light bar, or any other light carrier or transmitting substrate made of a transparent or substantially translucent material.

Known methods for joining the light guide to the decorative element + transparent moulding assembly include joining by adhesion, such as by means of a double-sided tape, or by means of mechanical connections, such as clipping means or brackets.

According to a second object of the invention, the present invention provides a portion of interior trim for a vehicle with integrated illumination for illuminating a decorative element, wherein the portion of interior trim comprises:
- a carrier structure,
- at least one light-emitting module, and
- a decorative element to be illuminated, wherein the decorative element extends along a longitudinal direction "X" and across the width in a transverse direction "Z",
characterised in that it further comprises:
- a transparent moulding, which extends across the length and width of the decorative element, wherein the transparent moulding comprises an incoming light surface and a front outgoing light surface, and wherein the transparent moulding is configured for receiving the light beams generated by the at least one light-emitting module through said incoming light surface and transmitting them through the interior of the transparent moulding by effect of the internal reflection when bouncing off the walls thereof; and
- wherein the decorative element is substantially opaque and is joined to the face of the transparent moulding opposite the front outgoing light surface, and wherein the decorative element is configured for generating an internal reflection of the light beams transmitted inside the transparent moulding and which strike said decorative element, so that the light beams reflected by the decorative element in a direction substantially perpendicular to the front outgoing light surface of the transparent moulding are extracted from said transparent moulding in a direction substantially perpendicular to said outgoing light surface, resulting in an illumination of the decorative element.

To better understand what has been set forth, several drawings are attached wherein an exemplary embodiment of the invention is schematically depicted merely by way of non-limiting example.

### Brief description of the figures

Figure 1 is a perspective view of the inner face of a possible door panel of a motor vehicle illuminated in a manner known in the State of the Art by means of a light guide arranged along a longitudinal direction "X".
Figure 2 is a schematic cross-sectional view along lines II-II of the illuminated motor vehicle door panel of Figure 1.
Figure 3 is a schematic cross-sectional view of another possible configuration of a motor vehicle door panel illuminated in a manner known in the State of the Art by means of a light guide arranged along a longitudinal direction "X".
Figure 4 is a schematic perspective view, cross-sectioned along a plane Y-Z, of the illumination system for vehicle interiors of the present invention.
Figure 5 is the same perspective view as Figure 4, but wherein various arrows have been incorporated which schematically represent the path of the different light beams coming from the light guide which are introduced inside the transparent moulding, and only the light beams that are reflected in a substantially perpendicular outgoing direction are extracted from the transparent moulding towards the interior of the passenger compartment of the vehicle, the rest of the beams being internally reflected in the transparent moulding.
Figure 6 is a cross-sectional schematic view of the illumination system for vehicle interiors of the invention formed by a decorative element and, joined on top, a transparent moulding.

### Description of exemplary embodiments

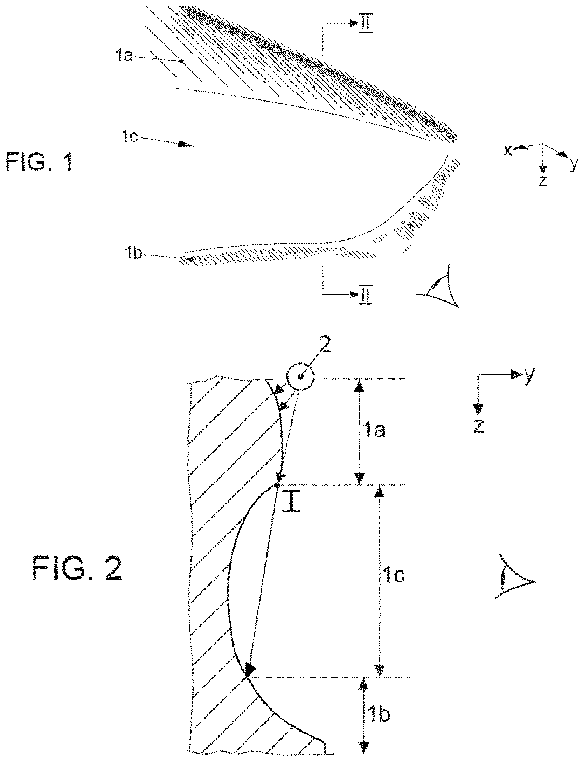

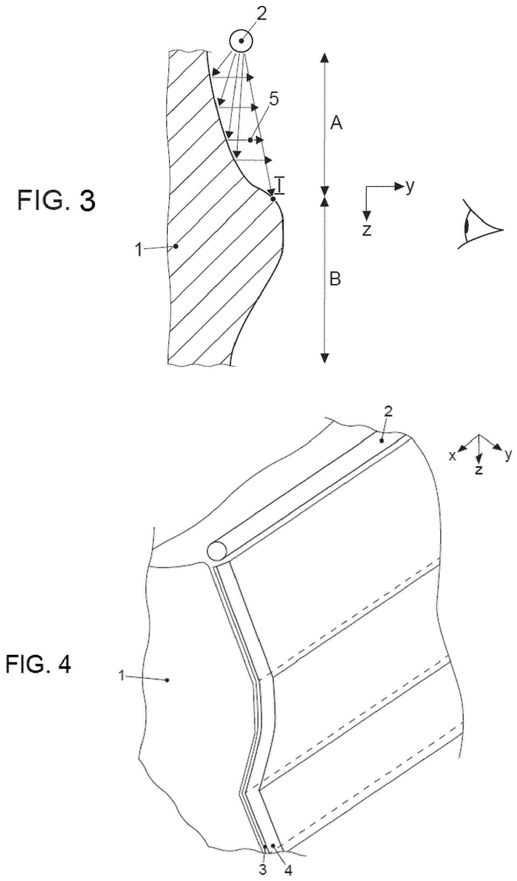

An exemplary embodiment of the illumination system for vehicle interiors of the present invention is described below with reference to Figures 4 to 6. The first three Figures 1 to 3 refer to an embodiment known in the State of the Art.

Figure 1 shows a possible door panel of a motor vehicle illuminated in a manner known in the State of the Art, which is illuminated along an upper strip 1a by means of a light guide (not shown in Figure 1) arranged along a longitudinal direction "X". The light guide (not shown in Figure 1) transmits the light beams along this longitudinal direction "X", wherein the light beams escape from the light guide and are directed towards the door panel in a vertical direction "Z" and downward direction, thereby generating an illumination in a progressive degraded manner in this vertical direction "Z" (i.e., having greater intensity in the area wherein the light guide is located and less intensity the greater the separation distance from the light guide).

The image shows that the light guide illuminates an upper strip 1a of the door panel and also a lower strip 1b of the door panel, while the intermediate area 1c would remain unlit, as explained later. The inclined strokes that are drawn in the upper strip 1a and lower strip 1b represent the intensity with which the outer surface of the door panel is illuminated, so that a higher density of the strokes represents a greater light intensity, occurring in an area near the light guide, while a lower density of the strokes represents a lower light intensity, occurring in the area farthest from said light guide, according to a vertical direction "Z".

Figure 2 represents a schematic cross-sectional view of Figure 1 along lines II-II. In this Figure 2, the particular configuration of the visible surface (i.e., the surface that faces the interior of the passenger compartment of the vehicle) of the possible door panel can be seen and the light guide 2 from where the different light beams are extracted can also be seen, schematically represented by several arrows. Said particular configuration has an illuminated upper visible surface (which we will call illuminated upper strip 1a) and an illuminated bottom visible surface (which we will call lower strip 1b), separated by an unlit intermediate strip 1c. The different strips (1a, 1b and 1c) are separated by an inflection line (which we will call "I" and which is represented by means of a point). The arrows represent the outgoing light beams of the light guide 2 that strike the front surface of the door panel (in areas 1a and 1c) and are reflected toward the interior of the passenger compartment of the vehicle (wherein a human eye has been represented).

As can be seen in Figure 2, the light beams are extracted by the light guide 2 in a vertical and downward direction, in a cone geometry. When the light beams strike a surface of the door panel, they are reflected. Therefore, an observer located inside the passenger compartment of the vehicle perceives said surface as illuminated. Now, the surface of the illuminated door panel depends on the position of the light guide 2, the direction of extraction of the light beams from said light guide 2 and the geometry and position of the door panel surface. Thus, according to the configuration shown, the light beams can directly strike only the upper strip 1a and the lower strip 1c. As can be seen, there is a change in the curvature of the door panel, going from a concave surface to a convex surface, divided by the inflection line I. Consequently, the door panel surface 1 which is struck directly by the light beams emitted by the light guide 2 is called "positive surface". On the contrary, the door panel surface that is not struck directly by the light beams emitted by the light guide 2 is called "negative surface". Under no circumstances may the intermediate strip 1c, i.e., the negative surface, be directly illuminated by said light beams, said area of the door panel not being able to be illuminated.

In Figure 3, we observe another possible configuration of the door panel illuminated by an elongated light guide 2 arranged along a longitudinal direction, wherein it illuminates an upper area "A" and leaves a lower area "B" unlit. The different areas ("A" and "B") are separated by an inflection line (which we will call "I" and which is represented by a point). We observe that the entire surface of the door panel that has a convex geometry with respect to the light guide 2 can be illuminated by it (in this case, the area "A"). Thus, the light beams will directly strike the door panel with a convex area (or positive surface). However, when there is an inflection point "I" with respect to said convex surface, the light beams emitted by the light guide 2 can no longer strike directly. Thus, in this specific example of Figure 3, the "B" area (also called negative surface) cannot be illuminated by the light guide 2 and remains unlit.

Figure 4 shows a possible embodiment of an illumination system for vehicle interiors of the invention arranged in an area of the door panel, which comprises a light guide 2, a decorative element 3 and, joined on top, a moulding 4 having a transparent body and low thickness. The elongated light guide 2 is arranged along a longitudinal direction "X" and the assembly formed by the decorative element 3 plus the transparent moulding 4 is arranged below the light guide 2. In this exemplary embodiment of the invention, the decorative element 3 and the transparent moulding 4 are surfaces that are in direct contact and have the same geometry, i.e., they have coincident front surfaces although of different thicknesses. The transparent moulding 4 has a greater thickness "e" (the term "thickness" being understood as the length in the direction "Y") since it must enable light beams to be reflected inside it. As can be seen, the decorative element 3 and the transparent moulding 4 have a geometry with at least three inflection points, represented by the horizontal lines in the direction "X" of continuous and discontinuous strokes. Consequently, there is a first positive area of both components with respect to the light guide 2 (the area closest to said light guide 2), a second negative area of both components with respect to the light guide 2 (the intermediate area shown), and a third partially negative and partially positive area (the lower area shown). Thanks to the configuration of the present invention and especially to the direct contact between the decorative element 3 and the transparent moulding 4, said decorative element 3 will be completely illuminated, both in the upper (positive) area thereof and in the intermediate and lower (negative) area thereof, as explained below.

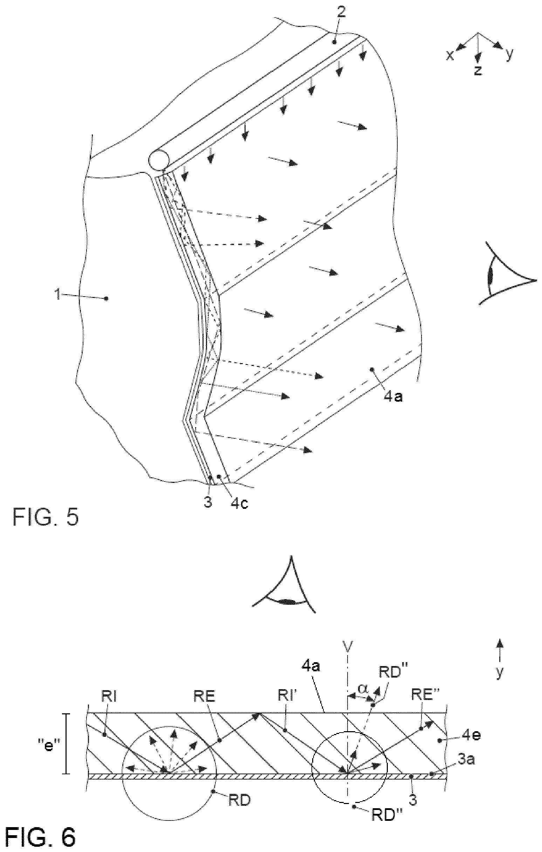

In Figure 5, different types of arrows (with continuous and discontinuous strokes of different widths) have been represented to illustrate the path followed by different types of light beams extracted from the light guide 2, which enter inside the transparent moulding 4 and which, finally, are extracted from said transparent moulding 4. First, the light beams are extracted from the light guide 2 in a vertical direction, by means of optical structures arranged in said light guide 2. The light beams are directed towards an incoming light surface of the transparent moulding 4 in order to be transmitted along the vertical direction "Z" and downwards by means of internal reflection. The light beams which strike the decorative element 3 are reflected in different directions by a combination of diffuse reflection and specular reflection, as explained below. The light beams reflected on the decorative element 3 and which strike the front outgoing light surface of the transparent moulding 4 (arranged opposite the decorative element 3) are extracted from the transparent moulding 4. The continuous strokes represent the light beams that have been able to escape from the transparent moulding 4 and come out in the direction of the passenger compartment of the vehicle (represented by a drawing of an eye).

In Figure 6, the decorative element 3 and the transparent moulding 4 have been represented as flat surfaces without irregularities, although as indicated above they may be non-flat surfaces. In said Figure 6, the different outgoing light beams of the light guide 2 which enter inside the transparent moulding 4 are represented, some of the light beams of which are reflected in the decorative element 3 and come out in a direction substantially perpendicular to the front outgoing surface 4a and are extracted from the transparent moulding 4 towards the interior of the passenger compartment of the vehicle (also represented with a drawing of an eye). Other light beams are bounced off the decorative element 3 and come out in a direction not substantially perpendicular to the front outgoing surface 4a and therefore are not extracted from the transparent moulding 4 but continue to bounce in the interior space formed inside the body of the transparent moulding 4.

The transparent moulding 4 has a solid and closed body formed by a front outgoing light surface 4a and a rear surface 4b for joining to the visible face 3a of the decorative element 3 and two lateral faces 4c and 4d. The transparent moulding 4 further comprises an inner area 4e for transmitting the light beams.

Different types of arrows have been represented to explain the different paths: a first striking ray RI on the left side of the drawing which is reflected on the visible surface 3a of decorative element 3 in two types of reflection: a diffuse reflection RD (i.e., in many angles) and also in the form of specular reflection RE (i.e., at only one angle). This specular reflection RE is reflected on the inner face of the front outgoing surface 4a of the transparent moulding 4 and since it is not substantially perpendicular, it continues to be reflected back into the body of the transparent moulding 4 with a second striking ray RI' through the central portion of the drawing until it once again bumps into the visible surface 3a of the decorative element 3, wherein it is reflected with a diffuse reflection RD" and a specular reflection RE".

Moreover, the diffuse reflection RD that occurs by striking the decorative element 3, generates a plurality of light beams in different directions. Of said reflected light beams, only the light beams which strike the front outgoing surface 4a in a substantially perpendicular direction are diffracted towards the outside of the transparent moulding 4. Thus, by way of example, one of the rays RD"₁ of the diffuse reflection RD" manages to escape from the transparent moulding 4 by being in a substantially perpendicular direction (in this case inclined an angle αᵢ of 20° with respect to the vertical "V", αᵢ comprising between -αₘₐₓ and + αₘₐₓ, wherein αₘₐₓ equals 30°). The rest of the light beams, i.e., the light beams that do not strike in a direction substantially perpendicular to the front outgoing surface 4a will continue to bounce inside the internal cavity of the transparent moulding 4.

Despite having referred to a specific embodiment of the invention, it is evident for one skilled in the art that the illumination system for vehicle interiors and the portion of interior trim for a vehicle with integrated illumination that have been described above are susceptible to a number of variations and modifications, and that all the mentioned details can be replaced with other technically equivalent ones without departing from the scope of protection defined by the attached the claims.

## Claims

1. An illumination system for vehicle interiors, which comprises:
- at least one light-emitting module, and
- a decorative element to be illuminated, wherein the decorative element extends along a longitudinal direction "X" and across the width in a transverse direction "Z",
**characterised in that**:
- it further comprises a transparent moulding, which extends across the length and width of the decorative element, wherein the transparent moulding comprises an incoming light surface and a front outgoing light surface, and wherein the transparent moulding is configured for receiving the light beams generated by the at least one light-emitting module through said incoming light surface and transmitting them through the interior of the transparent moulding by effect of the internal reflection when bouncing off the walls thereof; and
- wherein the decorative element is substantially opaque and is joined to the face of the transparent moulding opposite the front outgoing light surface, and wherein the decorative element is configured for generating an internal reflection of the light beams transmitted inside the transparent moulding and which strike said decorative element, so that the light beams reflected by the decorative element in a direction substantially perpendicular to the front outgoing light surface of the transparent moulding are extracted from said transparent moulding in a direction substantially perpendicular to said outgoing light surface, resulting in an illumination of the decorative element.

2. The illumination system for vehicle interiors according to claim 1, wherein the geometry of the internal face of the transparent moulding is equal to the decorative element to be illuminated.

3. The illumination system for vehicle interiors according to any of the preceding claims, wherein the decorative element to be illuminated is joined making direct contact with the entire surface of the inner side of the transparent moulding.

4. The illumination system for vehicle interiors according to any of the preceding claims, wherein the internal face of the transparent moulding covers the entire decorative element to be illuminated.

5. The illumination system for vehicle interiors according to any of the preceding claims, wherein the decorative element comprises a visible face with a painted surface finish.

6. The illumination system for vehicle interiors according to any of the preceding claims, wherein the outgoing light surface of the transparent moulding comprises a polished surface finish.

7. The illumination system for vehicle interiors according to any of the preceding claims, wherein the decorative element is joined to the internal face of the transparent moulding by means of one or more gluing points.

8. The illumination system for vehicle interiors according to any of claims 1 to 7, wherein the decorative element is joined to the internal face of the transparent moulding by means of over injecting the transparent moulding onto the decorative element.

9. The illumination system for vehicle interiors according to any of the preceding claims, wherein the decorative element is a foil with a homogeneous colour or with a pattern or with a decorative drawing printed on at least one of the faces thereof.

10. The illumination system for vehicle interiors according to any of the preceding claims, wherein the at least one light-emitting module comprises a plurality of light emitters arranged along the direction "X" configured for generating light beams in the direction "Z".

11. The illumination system for vehicle interiors according to any of claims 1 to 9, wherein the at least one light-emitting module comprises at least one light emitter that emits light in the direction "X" and at least one light guide arranged along the direction "X" and configured for transmitting the light beams along the direction "X" by internal reflection and for extracting the light beams in the direction "Z" towards the incoming surface of the transparent moulding.

12. The illumination system for vehicle interiors according to any of the preceding claims, wherein the transparent moulding has a three-dimensional body with a thickness comprised between 1 and 6 mm.

13. The illumination system for vehicle interiors according to claim 11, wherein the transparent moulding has a three-dimensional geometry with the existence of one or more negative portions.

14. The illumination system for vehicle interiors according to any of the preceding claims, wherein it comprises a single transparent moulding for each interior surface to be illuminated.

15. A portion of interior trim for a vehicle with integrated illumination for illuminating a decorative element, wherein the portion of interior trim comprises:
- a carrier structure,
- at least one light-emitting module, and
- a decorative element to be illuminated, wherein the decorative element extends along a longitudinal direction "X" and across the width in a transverse direction "Z",
**characterised in that**:
- it further comprises a transparent moulding, which extends across the length and width of the decorative element, wherein the transparent moulding comprises an incoming light surface and a front outgoing light surface, and wherein the transparent moulding is configured for receiving the light beams generated by the at least one light-emitting module through said incoming light surface and transmitting them through the interior of the transparent moulding by effect of the internal reflection when bouncing off the walls thereof; and
- wherein the decorative element is substantially opaque and is joined to the face of the transparent moulding opposite the front outgoing light surface, and wherein the decorative element is configured for generating an internal reflection of the light beams transmitted inside the transparent moulding and which strike said decorative element, so that the light beams reflected by the decorative element in a direction substantially perpendicular to the front outgoing light surface of the transparent moulding are extracted from said transparent moulding in a direction substantially perpendicular to said outgoing light surface, resulting in an illumination of the decorative element.
